# EUROPÄISCHE PATENTANMELDUNG

(11) **EP 0 522 232 A2**
(43) Veröffentlichungstag der Anmeldung: **13.01.1993**
(21) Anmeldenummer: 92102163.0
(22) Anmeldetag: 10.02.1992
(51) Int. Cl.: C25C 7/00, C25C 7/08

(54) **Elektrode für das Austragen von Metallen aus Metallionen enthaltender Lösung**

(30) Priorität: 12.07.1991 DE 4123196
(71) Anmelder: Heraeus Elektrochemie GmbH, D-63450 Hanau (DE)
(72) Erfinder: Heinke, Harri, W-6455 Erlensee (DE)
(74) Vertreter: Kühn, Hans-Christian

(57) **Zusammenfassung**

Die Vorrichtung dient zum kontinuierlichen elektrolytischen Austragen von Metallen einer Metallionen enthaltenden Lösung mittels eines teilweise in die Lösung eintauchenden, durch die Lösung laufenden flexiblen Bandes als Kathodenfläche, wobei das Band in der Lösung über eine erste Rolle als Kathodenwalze geführt wird; außerhalb der Lösung sind in Bandumlaufrichtung gesehen nacheinander eine Abstreifvorrichtung sowie eine Abspülvorrichtung für das abgeschiedene Metall angeordnet. Die Kathodenwalze ist um eine gegenüber der Oberfläche der Lösung um 45° geneigte Achse drehbar gelagert und über einen Stromabnehmer mit dem negativen Pol einer Spannungsquelle verbunden. Außerhalb der Lösung ist eine zweite Rolle als Umlenk- und Antriebsrolle für das flexible Band so angeordnet, daß ihre Drehachse zur Achse der als Kathodenwalze dienenden ersten Rolle parallel verläuft.

Das auf der Kathodenwalze aufliegende Band wird wenigstens zum Teil von einer mit dem positiven Pol der Spannungsquelle elektrisch verbundenen flächenhaften Anode umfaßt.

## Beschreibung

Die Erfindung betrifft eine Vorrichtung zum kontinuierlichen elektrolytischen Austragen von Metallen aus einer Metallionen enthaltenden Lösung in die jeweils eine mit einer Stromversorgung elektrisch verbundene Anode und Kathode eintauchen, wobei die Kathode eine teilweise in die Lösung eintauchende, durch die Lösung laufende, als endloses flexibles Band ausgebildeten Kathodenfläche, aufweist, von der das abgeschiedene Metall außerhalb der Lösung entfernt wird und das flexible Band wenigstens auf dem Teil seiner Oberfläche, auf dem sich Metall abscheidet, metallisch ausgebildet ist und außerhalb der Lösung eine Abstreifvorrichtung für das abgeschiedene Metall angeordnet sind und daß das Band mittels Umlenk-und/oder Antriebsrollen geführt ist,

Aus der DE-PS 36 40 020 ist eine Elektrolysezelle zur elektrolytischen Abscheidung von Metallen aus Metallionen enthaltender Flüssigkeit, insbesondere Prozeßabwasser, bekannt, welche eine Vielzahl von flächenhaften, zueinander im Abstand parallel angeordneten Elektroden in einem Trog enthält, wobei die Kathoden Öffnungen aufweisen und je nach Abstand zur Anode über verschieden große Anschlußwiderstände mit der Stromquelle verbunden sind, so daß die Kathoden jeweils mit der gleichen Stromdichte beaufschlagt werden.

Als problematisch erweist sich bei einer solchen Anlage die verhältnismäßig lohnintensive Einzelentnahme der mit dem abgeschiedenen Metall versehenen Kathodenfläche sowie das verhältnismäßig arbeitsaufwendige Entfernen des abgeschiedenen Materials.

Aus der EP-OS 248 118 ist eine elektrolytische Vorrichtung zur kontinuierlichen Herstellung von Metallfolien aus einer in einem Tank befindlichen Metallionen enthaltenden Lösung bekannt, wobei die teilweise in die Lösung eingetauchte Kathode als Trommel oder umlaufendes Endlosband ausgeführt ist; sie wird in ihrem eingetauchten Bereich von einer im Abstand angeordneten Anode umgeben, die mit Kanälen bzw. Öffnungen für den Elektrolytzutritt versehen ist. Das auf der Kathode abgeschiedene Metall wird nach Verlassen der Lösung von der Kathode abgetrennt.

Die Kathode weist dabei eine aus Metall bestehende Oberfläche, beispielsweise aus Titan oder Tantal, auf, während die Anode beispielsweise aus Titan besteht. Als Lösung wird eine saure Metallionen-Lösung, beispielsweise aus Kupfersulfat und Schwefelsäure, eingesetzt.

Als problematisch erweist sich hier die kontinuierliche Ausbringung von Metallen mittels bewegter Kathode, sofern es nicht möglich ist, homogene, kompakte sich selbst tragende Metallschichten auf der Kathode abzuscheiden; schwierig wird es insbesondere bei schlammähnlichen Metallstrukturen bzw. Dendriten oder andersartigen undefinierbaren Metallstrukturen, wie z.B. Kugelstrukturen, die untereinander keine homogene Schichten bei der Abscheidung bilden.

Weiterhin ist aus der US-PS 20 99 873 eine elektrolytische Vorrichtung zur Ausbringung von Flockenmaterial aus einem elektrolytischen Bad bekannt, wobei als Kathode ein umlaufendes flexibles Endlosband vorgesehen ist; das Metall (Chrom) wird auf dem Band kathodisch abgeschieden und aus der elektrolytischen Lösung heraus zu einer separaten Abspülvorrichtung geführt, wo das abgeschiedene Metall (Chrom) vom Band getrennt wird.

Das Band wird mittels Umlenk- und Antriebsrollen geführt, wobei eine das Band führende Antriebsrolle mit einer oberhalb des Bades angeordneten horizontalen Achse gedreht wird; die Mantelfläche der im Verhältnis zum Tank großen Rolle taucht mit nur einem geringen Teil ihrer Mantelfläche in das Bad ein; außerhalb des Bades ist eine Vielzahl von Umlenkrollen vorgesehen.

Aus der US-PS 27 48 071 ist eine Vorrichtung zur Regeneration von Eisenchlorid im Kupferätzprozeß bekannt, wobei ebenfalls eine als Endlosband ausgebildete Kathodenfläche über Umlenk-und Antriebsrollen geführt wird. Nach Verlassen der Lösung wird das Band einem Wasserbad zur Abtrennung des Kupfers zugeführt. Als Abstreifvorrichtung dient ein chirurgisches Messer, wobei das Metall (Kupfer) einem weiteren elektrolytischen Tank zugeführt wird; eine Entnahme von getrocknetem, pulverförmigem Metall ist hier nicht vorgesehen.

Die US-PS 29 64 453 beschreibt ebenfalls ein Regenerationsverfahren für ein Kupferätzbad, wobei ebenfalls ein flexibles Band (Platin) eingesetzt wird, das nacheinander ein Ätzbad, ein Spülbad und ein Abstreifbad durchläuft, wobei das Band im Ätzbad kathodisch und im Abstreifbad anodisch geschaltet ist. Eine mechanische Abstreifvorrichtung wie sie in der Praxis für die Weiterverarbeitung von getrocknetem abgeschiedenem Material erforderlich ist, ist hier nicht angegeben.

Aus der US-PS 29 85 568 ist ein elektrolytisches Verfahren zur Herstellung von metallorganischen Verbindungen bekannt, wobei ebenfalls ein metallisches Endlosband vorgesehen ist. Als problematisch erweisen sich hier die Abdichtung der Naben der Kathodenwalze sowie die Stromzuführung zur Kathodenwalze innerhalb des Elektrolyten.

Außerhalb des Bades durchläuft das Endlosband eine Station mit einer mechanischen Abstreifvorrichtung in Form eines Messers.

Weiterhin ist aus der DE-OS 40 35 328 eine Vorrichtung zum kontinuierlichen elektrolytischen Austragen von Metallen aus einer Metallionen enthaltenden Lösung mittels eines teilweise in die Lösung eintauchenden, durch die Lösung laufenden Bandes als Kathodenfläche bekannt, wobei das Band in der Lösung über eine Kathodenwalze geführt wird; außerhalb der Lösung sind in Bandumlaufrichtung gesehen nacheinander eine Abstreifvorrichtung sowie eine Abspülvorrichtung für das abgeschiedene Metall angeordnet. In einer praktischen Ausführungsform ist die Kathodenwalze um eine horizontale Achse drehbar gelagert und über einen Stromabnehmer mit dem negativen Pol einer Spannungsquelle verbunden.

Als problematisch sind bei horizontaler Anordnung der Drehachse der Kathodenwalze die Abdichtung der Walzenenden anzusehen; weiterhin können durch Korrosionserscheinungen in der Stromübertragung zur Kathodenwalze aufgrund der chemisch aggressiven Lösung erhöhte Übergangswiderstände im Stromkreis auftreten.

Die Erfindung stellt sich die Aufgabe, in inhomogener Form sich abscheidende Metalle aus einer Metallionen enthaltenden Lösung auszubringen; dabei soll eine weitgehend selbsttätig arbeitende Vorrichtung geschaffen werden, so daß lohnintensive Arbeitsgänge zur Entfernung des abgeschiedenen Materials entfallen können, weiterhin sollen Dichtungsprobleme der Welle bzw. der Naben der Kathodenwalze verhindert werden. Die Stromzuführung zur Kathodenwalze soll außerhalb des Elektrolyten erfolgen.

Die Aufgabe wird erfindungsgemäß dadurch gelöst, daß die Achsen der Umlenk und Antriebs- Rollen mit der Flächennormalen des Flüssigkeitsspiegels der Lösung einen Winkel im Bereich von 20 bis 70 ° einschließen, wobei eine erste Rolle als Kathodenwalze mit ihrer unteren Nabe und wenigstens einem Teil ihrer elektrisch leitenden Mantelfläche in die Lösung eintaucht und wenigstens eine zweite Rolle als Umlenk-Rolle außerhalb der Lösung angeordnet ist und daß das Band auf seiner zu ersten Rolle gerichteten Oberfläche elektrisch leitend ausgebildet ist.

Ein wesentlicher Vorteil des Gegenstandes der Erfindung ist darin zu sehen, daß einerseits ein verhältnismäßig großer Bereich des Mantels der Kathodenwalze und der die Kathodenwalze umhüllende Teil des Bandes in die Lösung eintauchen, wobei andererseits keinerlei Dichtungsprobleme der Lagerung der unteren Nabe in der Lösung bzw. im Trog auftreten.

In einer bevorzugten Ausführungsform ist in Bandrichtung gesehen, der Abstreifvorrichtung eine Abspülvorrichtung nachgeschaltet, so daß das Band vor dem Wiedereintritt in die Lösung gründlich gereinigt ist.

Weiterhin ist die aus der Lösung herausragende Habe bzw. der Wellen-Stumpf der als Kathodenwalze dienenden ersten Rolle mit einem Stromabnehmer zwecks Kontaktierung mit dem negativen Pol der Spannungsquelle verbunden; vorteilhafterweise kann auf diese Weise praktisch die gesamte Mantelfläche und damit auch der die Mantelfläche umspannende Bereich des flexiblen Bandes zwecks hoher Ausbeute in die Lösung eingetaucht werden, andererseits können durch die Kontaktierung Korrosionsprobleme in der Stromübertragung zur Kathodenwalze und der daraus resultierende erhöhte Übergangswiderstand vermieden werden.

In einer besonders vorteilhaften Ausgestaltung ist die Kathodenwalze einseitig an ihrem oberen Ende gelagert; d. h. daß zur Lagerung nur der aus der Lösung herausragende Wellen-Stumpf bzw. nur die aus der Lösung herausragende Nabe der ersten Rolle vorgesehen ist.

Ein wesentlicher Vorteil dieser Ausführungsform ist darin zu sehen, daß praktisch keine Korrosionsprobleme im Bereich der Walzenlager der Rolle auftreten; darüberhinaus läßt sich die Kathodenwalze aufgrund ihrer einseitigen Halterung leicht und schnell auswechseln.

In einer weiteren bevorzugten Ausführungsform wird das Band nach Verlassen der Lösung vor dem Erreichen der Abstreifvorrichtung einer Trockenvorrichtung zugeführt, welche Glühwendel zur Abgabe von Wärmestrahlung aufweist. Unterhalb der Abstreifvorrichtung ist eine Sammelvorrichtung für das abgeschiedene elektrolythaltige Metall angeordnet, an die sich eine Abtrennvorrichtung anschließt.

Weitere vorteilhafte Ausgestaltungen des Gegenstandes der Erfindung sind in den Ansprüchen 6 bis 11 angegeben.

Ein wesentlicher Vorteil ist weiterhin in der einfachen Optimierung durch Einstellung von Bandumlaufgeschwindigkeit und Stromdichte zu sehen, so daß diese Parameter jeweils der Konzentration und Temperatur der Lösung optimal angepaßt werden können. Ein weiterer Vorteil ist in der Automatisierbarkeit der kontinuierlichen Aufbringung zu sehen.

Im folgenden ist der Gegenstand der Erfindung anhand der Figuren 1 bis 4 erläutert.
Figur 1 zeigt die Vorrichtung in einer perspektivischen Ansicht;
Figur 2 zeigt eine ähnliche Vorrichtung wie Figur 1, wobei die Elektrodenanordnung in einem kompakten Gestell untergebracht ist;
Figur 3 zeigt eine Längsschnittdarstellung der Vorrichtung;
Figur 4 zeigt eine der Figur 1 im wesentlichen entsprechende Ausführungsform, wobei die in die Lösung tauchende erste Rolle einen größeren Durchmesser aufweist als die zweite Rolle.

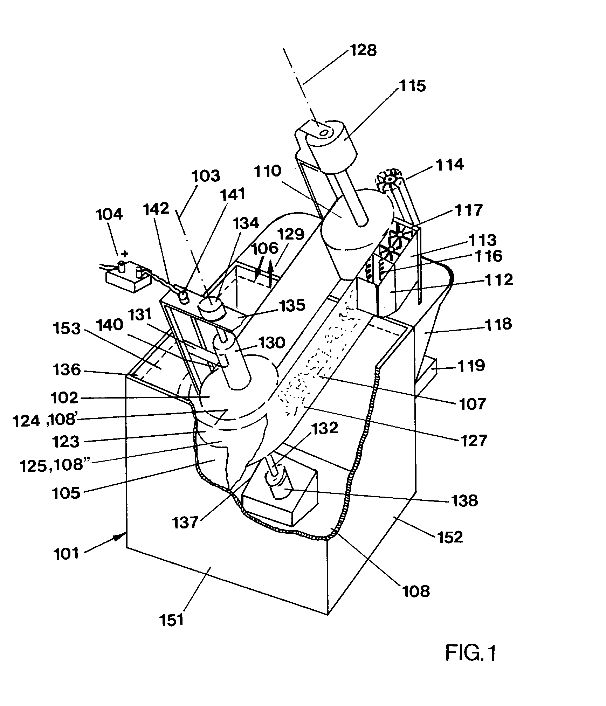

Gemäß Figur 1 weist die erfindungsgemäße Vorrichtung einen die Lösung 108 enthaltenden Trog 101 aus elektrolytbeständigem Werkstoff, wie beispielsweise elektrolytbeständigem Kunststoff, auf. In dem Trog befindet sich eine mit dem negativen Pol einer Spannungsquelle 104 elektrisch verbundene erste Rolle 102 als Kathodenwalze, die um eine Achse 103 drehbar gelagert ist, welche mit der auf dem Flüssigkeitsspiegel der Lösung aufgespannten Flächennormalen 129 einen Winkel von ca. 45 bildet. Die Kathodenwalze ist auf ihrer der Stirnwand 151 und den Seitenwänden 152, 153 des Troges 101 zugeordneten Seite von einer halbkreisförmigen bzw. U-förmigen Anode 105 aus Streckmetall bzw. perforierten Metall mit einer Aktivierungsschicht umgeben, die mit dem positiven Pol der Spannungsquelle 104 verbunden ist. Die Anode 105 ist zwecks besserer Übersicht aufgebrochen dargestellt, wobei auf die Darstellung der Verbindung zur Spannungsquelle ebenfalls verzichtet wurde.

Das Flüssigkeits-Niveau der Lösung 108 ist mit Bezugsziffer 106 bezeichnet. Das um die Kathodenwalze laufende flexible Band 107 befindet sich mit seinen beiden metallischen Oberflächen auf dem Potential der Kathodenwalze 102, d.h. es ist durch die obere Habe 130 der Kathodenwalze und Stromabnehmer 131 mit dem negativen Pol der Stromversorgung verbunden.

Dabei weist der Träger 135 im Bereich oberhalb des Flüssigkeitsspiegels des Elektrolyten 108 einen Stromabnehmer 131 auf, der durch Schleifringskontakte 139 mit der elektrisch leitenden oberen Nabe 130 der ersten Rolle 102 elektrisch verbunden ist, wobei der elektrische Anschluß des Stromabnehmers 139 zur Spannungsquelle 131 über Leitung 140 und Anschlußkontakt 141 sowie Leitung 142 erfolgt.

Die obere Habe 130 wird an ihrem Ende von einem Lager 134 gehalten, das an einem nur teilweise dargestellten bzw. aufgebrochen gezeigten Träger 135 befestigt ist, der mittels Längssäule 136 an der Lagerbockhalterung 137 für das unter Lager 138 befestigt ist. Lagerbockhalterung 137 und Träger 135 sind mit dem Trog 101 durch hier nicht näher dargestellte Verbindungselemente mechanisch fest verbunden.

Die untere Nabe 132 ruht im unteren Lager 138, das durch die keilförmig ausgebildete Lagerbock-Haltung 137 einen Winkel von 45 zur Normalen 129 des Flüssigkeitspegels 108 aufweist.

Das flexible Band 107 umfaßt die als Kathodenwalze dienende erste Rolle 102 zu etwa dem 0,5- fachen ihres Umfanges, wobei das Band 107 außerhalb der Elektrolyt-Lösung mittels der als Antriebsrolle dienenden zweiten Rolle 110 durch die verschiedenen Arbeitsstationen, wie Trockenvorrichtung 112, Abstreifvorrichtung 113 und Abspülvorrichtung 114 geführt wird. Die Rolle 110 wird dabei von einem schematisch dargestellten Elektromotor 115 (ggf. über ein Getriebe) angetrieben. Die Achse 128 der zweiten Rolle 110 verläuft parallel zur Achse 103 der Kathodenwalze; die zweite Rolle 110 wird in ihrem oberen und unteren Lager durch eine Trägervorrichtung 144 gehalten, die einen weitgehend gleichen Aufbau wie Träger und Lager der ersten Rolle aufweist. Die Achse der Rolle 110 ist durch eine Federung abgestützt, so daß das flexible Band 107 stets gespannt ist und transportiert wird. Darüberhinaus ist es möglich, die als Kathodenwalze dienende Rolle 102 mit einer Kühlung zu versehen, um eine hohe Stromdichte auf dem die Kathode umlaufenden Band 107 zu erzielen.

Weiterhin ist es möglich eine Trennvorrichtung 123 z. B. aus lonenaustauschmembran einzusetzen, welche den Elektrolytraum 143 des Troges 101 in einen der ersten Rolle 102 als Kathodenwalze zugekehrten Katholytraum 124 und einen auf der anderen Seite der Trennvorrichtung 123 befindlichen Anolytraum 125 aufteilt, wobei sich dann die Lösung 108 in einen Katholyten 108' und einen Anolyten 108" aufteilt. Selbstverständlich ist es jederzeit möglich, je nach Anwendungsfall auf die Trennvorrichtung zu verzichten und einen gemeinsamen Elektrolytraum 143 mit Elektrolyt-Lösung 108 zu schaffen oder an Stelle einer lonenaustauschmembran ein Diaphragma als Trennvorrichtung 123 einzusetzen. Die Trennvorrichtung 123 ist hier ebenso wie die Anode 105 zwecks besserer Übersicht nur aufgebrochen dargestellt.

Die Bandumlaufgeschwindigkeit beträgt ca. 0,84 m/min bei einer Stromdichte von 6500 A/m². Es ist möglich, eine Bandumlaufgeschwindigkeit im Bereich von 0,3 m/min bis 1,44 m/min vorzusehen, wobei eine größere Umlaufgeschwindigkeit durch eine größere Stromdichte kompensiert werden muß; als maximale Stromdichte sind 10.000 A/m² vorgesehen.

Vom Umfang der Kathodenwalze sind mindestens 50% im Elektrolyten bzw. Katholyten eingetaucht, d.h. mindestens 50% des Walzenumfanges befinden sich unterhalb des mit Ziffer 106 bezeichneten Elektrolytniveaus. Die Temperatur der Elektrolytlösung liegt dabei im Bereich von 20 bis 100°C.

Die Temperatur in der Trockenvorrichtung 112 liegt dabei unterhalb der Grenztemperatur des Bandes, um eine Diffusion zwischen dem abgeschiedenen Metall und dem Band zu vermeiden.

Entstehende Gase können durch die geöffnete Oberseite des Troges 101 austreten. Bei geschlossener Oberseite des Troges befinden sich im oberen Bereich des Troges zusätzliche Öffnungen zur Gasausbringung bzw. Gasabsaugung der im Verfahren sich entwickelnden Gase, die hier jedoch nicht dargestellt sind.

Im Betrieb wird das flexible Band 107 nach Verlassen der Abspülvorrichtung 114 über Antriebs-Rolle 110 der Kathodenwalze 102 zugeführt und in die Lösung 108 eingetaucht. Die Kontaktierung des flexiblen Bandes 107 erfolgt dabei stets über die erste Rolle 102 als Kathodenwalze.

Während des Band-Umlaufes wird auf dem eingetauchten Teil des als auf Rolle 102 aufliegenden Teil des Bandes 107 wird aus der Lösung Metall abgeschieden, welches nach Durchlaufen der Lösung 108 auf der anderen Seite der als Kathodenwalze dienenden Rolle 102 das Bad wiederum verläßt; das aus dem abgeschiedenen Metall und flüssigen Elektrolytpartikeln bestehende Material 127 ist symbolisch durch Punkte auf Band 107 angedeutet. Das flexible Band 107 wird anschließend zunächst der Trockenvorrichtung 112 zugeführt, in der das abgeschiedene Material durch Wärmestrahlung mittels Glühwendel 116 soweit getrocknet wird, daß es der anschließenden Abstreifvorrichtung 113 zwecks mechanischer Abtrennung mittels rotierenden Bürsten 117 und Schaber zugeführt werden kann. Das von den Bürsten und Schabern abgestreifte elektrolythaltige Metall verläßt das Band und wird durch freien Fall der trichterförmigen Sammelvorrichtung 118 zugeführt, wobei das Metall im wesentlichen ein Konglomerat aus Pulver und zusammenhängenden Abscheidungsbrocken darstellt; zur Verbesserung des Materialflusses kann die Sammelvorrichtung mit einem Vibrator versehen sein; das elektrolythaltige Metall wird anschließend in einer Abtrennvorrichtung 119 durch Pressen und Filtern von restlichen Elektrolytpartikeln getrennt, so daß eine Wiederauflösung des zuvor abgeschiedenen Metalls verhindert wird. Anschließend durchläuft das Band die Abspülvorrichtung 114, in welcher mittels umlaufender Kratzbürsten 120 das Band 107 von sämtlichen Abscheidungsprodukten gereinigt wird, so daß es erneut der Kathodenwalze 102 im Trog 101 zugeführt werden kann.

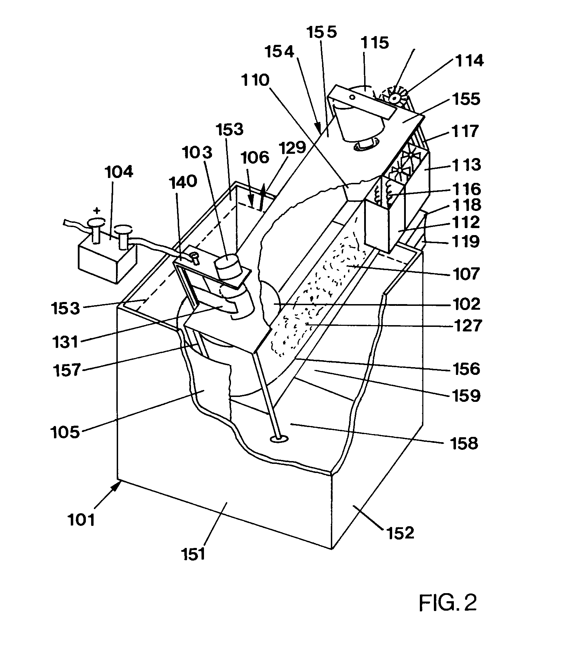

Die in Figur 2 dargestellte Anordnung entspricht in Funktion und Aufbau der anhand der Figur 1 beschriebenen Vorrichtung. Die beiden Rollen 102 und 110 sind hier in einem Gestell 154 drehbar gelagert, wobei die als Kathodenwalze dienende erste Rolle 102 wiederum mit einem Stromabnehmer 131 zur Kontaktierung des negativen Pols der Spannungsquelle 104 verbunden ist, während die gegenüberliegende zweite Rolle 110 mit einer Antriebsvorrichtung 115 verbunden ist. Zwischen beiden Rollen ist das flexible Band 107 mittels Federkraft aufgespannt, welches als kathodische Abscheidungsfläche dient und auf seiner Rückseite mit der als Kathodenwalze dienenden Rolle 102 elektrisch kontaktiert ist. Die obere Platte 155 des Gestells 154 ist teilweise aufgebrochen dargestellt, um den Verlauf des flexiblen Bandes 107 darzustellen. Trockenvorrichtung 112, Abstreifvorrichtung 113 sowie Abspülvorrichtung 114 sind nunmehr mit dem Gestell 154 mechanisch fest verbunden, dies gilt auch für die trichterförmige Sammelvorrichtung 118 und die Abtrennvorrichtung 119. Das Gestell 154 ruht mittels der Distanzelemente 157, 158 in einer vorgegebenen Position auf dem Boden des Troges 101, wobei die untere Platte 156 durch die Oberkante der hinteren Trogwand 159 abgestützt ist. Die Vorrichtung gemäß Figur 2 weist gegenüber der funktionsgleichen Vorrichtung gemäß Figur 1 den Vorteil erhöhter Kompaktheit sowie leichter Auswechselbarkeit der Elektrodenanordnung bzw. von Einzelkomponenten wie zum Beispiel flexibles Band oder Kontaktierungsvorrichtung auf, wobei das Gestell 154 auf einfache Weise vom Trog 101 zu trennen ist.

Auch bei dieser Ausführungsform ist eine einseitige, und eine zweiseitige Lagerung der als Kathodenwalze dienenden ersten Rolle 102 möglich.

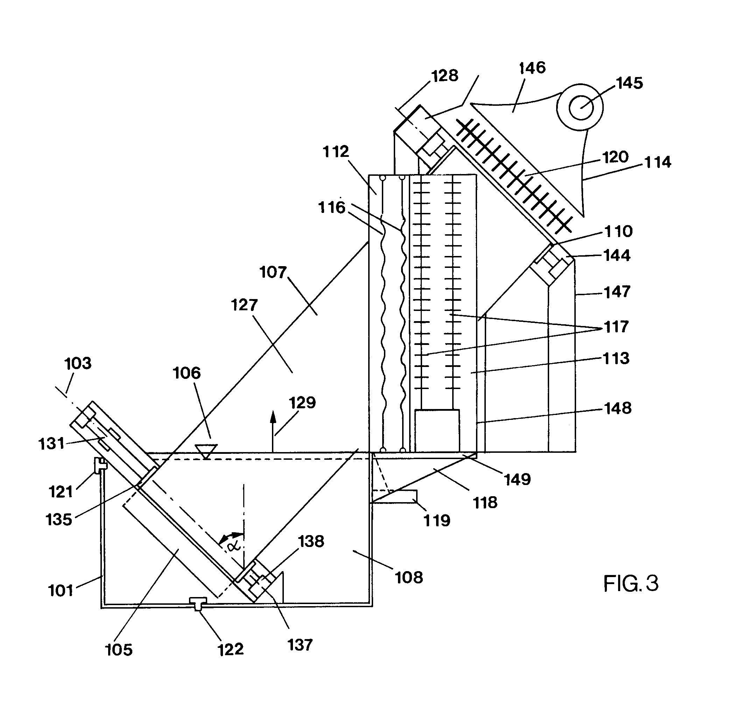

Gemäß Figur 3 taucht die als erste Rolle 102 dienende Kathodenwalze vollständig in die Lösung 108 ein, so daß sich die Oberkante der Kathodenwalze unterhalb des Flüssigkeitsniveaus 106 befindet. Die Rolle 102 befindet sich mit ihrer Achse 103 in einem Winkel von 45 zur Flächennormalen 128, die sich auf dem Flüssigkeitspegel 106 aufspannt. Die Rolle 102 wird mit ihrer unteren Habe 132 in Lager 138 und mit ihrer oberen Habe 130 in Lager 134 geführt, wobei beide Lager über Träger 135 miteinander verbunden sind und der Träger 135 wiederum mit der Lagebock-Halterung 137 fest arretiert ist. Der Neigungswinkel von 45 läßt einen verhältnismäßig kleinen Rauminhalt des Troges 101 zu, wobei der Trog mit Ausnahme von Eingangsöffnung 121, Ausgangsöffnung 122 sowie seiner Oberseite rundherum abgedichtet ist. Die Stromzuführung der Kathodenwalze erfolgt über Stromabnehmer 131, welcher hier symbolisch dargestellt ist. Nach Verlassen des Bades bewegt sich das Endlosband 107 über die Oberkante des Troges 101 in Richtung Abstreifvorrichtung 113, welcher mit rotierenden Bürsten 117 zur Entfernung des galvanisch abgeschiedenen Metalls vom flexiblen Band 107 ermöglichen. Um zu einer möglichst effizienten Arbeitsweise zu gelangen, wird der Abstreifvorrichtung 113 eine Trockenvorrichtung 112 vorgeschaltet, welche hier symbolisch dargestellte Glühwendel 116 aufweist, die zur Wärmetrocknung des abgeschiedenen Materials dienen.

Das auf der Abstreifvorrichtung mittels umlaufender Bürsten und Schaber abgestreifte, elektrolythaltige Metall verläßt das Band und wird durch freien Fall der trichterförmigen Sammelvorrichtung 118 mit sich anschließender Abtrennvorrichtung 119 zugeführt, wobei das Metall im wesentlichen ein Konglomerat aus Pulver und zusammenhängenden Abscheidungsbrocken darstellt. Anschließend durchläuft das Band die ebenfalls symbolisch dargestellte Abspülvorrichtung 114, in welcher mittels umlaufender Kratzbürsten 120 das Band 107 von sämtlichen Abscheidungsprodukten gereinigt wird, so daß es erneut dem Trog 101 zugeführt werden kann. Hierzu dient ein mit der Trägervorrichtung 144 verbundenes symbolisch dargestelltes Gebläse 145, dessen Düse 146 einen Gasstrom zwecks Reinigung auf die Abspülvorrichtung 114 lenkt. Es ist jedoch auch möglich anstelle des Gasstromes einen Flüssigkeitsstrom einzusetzen. Die Trägervorrichtung 144 ist mittels der Längssäulen 147, 148 ebenso wie die Trockenvorrichtung 112 und Abstreifvorrichtung 113 auf einer mit dem Trog fest verbundenen Konsole 149 abgestützt. Arbeitsweise und Aufbau entsprechen im übrigen, der unter Figur 1 erläuterten Vorrichtung, wobei selbstverständlich auch gemäß Figur 1 eine lonenaustauschmembran zwischen Anode 105 und der als Kathodenwalze dienenden ersten Rolle 102 vorgesehen werden kann, so daß sich ein Anolyt- und ein Katholytraum bilden.

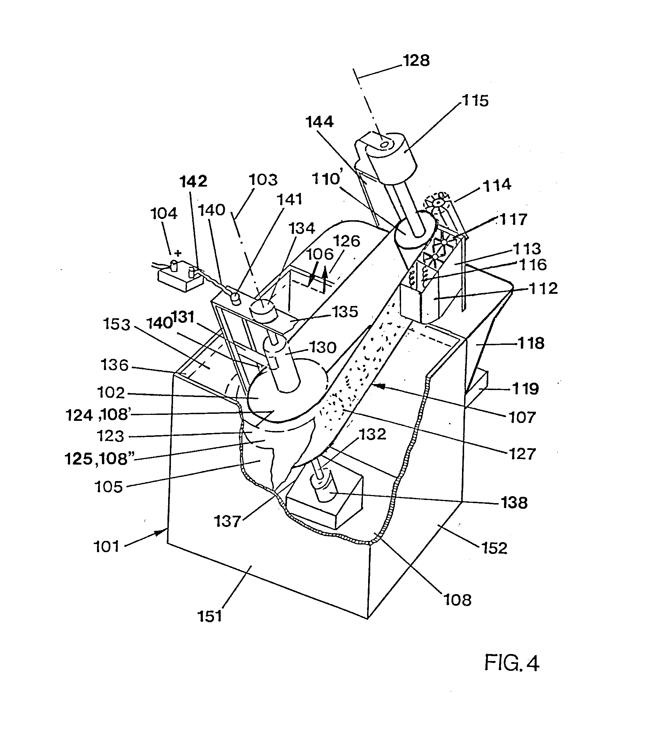

Die in Figur 4 dargestellte Ausführungsform entspricht in ihrer Funktion weitgehend der anhand Figur 1 beschriebenen Vorrichtung, wobei allerdings die in die Lösung tauchende erste Rolle 102 einen größeren Durchmesser aufweist, als die außerhalb der Lösung befindliche zweite Rolle 110': aufgrund des in Richtung der zweiten Rolle 110' sich verringernden Abstandes der beiden sich gegenüberliegenden Seiten des flexiblen Bandes 107 wird die erste Rolle 102 zu mehr als 50% vom Band 107 umfaßt, so daß sich eine größere Kontaktierungsfläche zwischen erster Rolle 102 und Band 107 ergibt. Der Abstand der beiden Rollenachsen 103, 128 und die Durchmesser der beiden Rollen 102 und 110' werden dabei so gewählt, daß die erste Rolle 102 zu etwa dem 0,55 bis 0,65-fachen, insbesondere zum 0,6-fachen ihres Umfanges von dem flexiblen Band 107 umfaßt wird.

Der beschriebene Einsatz einer zweiten Rolle mit einem geringeren Rollen-Durchmesser gegenüber dem Durchmesser der als Kathodenwalze dienenden ersten Rolle läßt sich auch bei der Elektrodenanordnung in einem kompakten Gestell gemäß Figur 2 anwenden.

Als Elektrolyt-Lösung wird beispielsweise eine Zinksulfat-Lösung dem Trog 101 zugeführt, während das abgeschiedene Metall im wesentlichen aus Zink besteht. Es ist selbstverständlich auch möglich, die erfindungsgemäße Vorrichtung zum elektrolytischen Austragen von anderen Metallen - beispielsweise Schwer- oder Edelmetallen - aus anderen Metallionen enthaltenden alkalischen oder sauren Lösungen einzusetzen.

## Patentansprüche

1. Vorrichtung zum kontinuierlichen elektrolytischen Austragen von Metallen aus einer Metallionen enthaltenden Lösung (108) in die jeweils eine mit einer Stromversorgung (104) elektrisch verbundene Anode (105) und Kathode eintauchen, wobei die Kathode eine teilweise in die Lösung eintauchende, durch die Lösung laufende, als endloses flexibles Band (107) ausgebildete Kathodenfläche, aufweist, von der das abgeschiedene Metall außerhalb der Lösung entfernt wird und das flexible Band wenigstens auf dem Teil seiner Oberfläche, auf dem sich Metall abscheidet, metallisch ausgebildet ist und außerhalb der Lösung eine Abstreifvorrichtung (113) für das abgeschiedene Metall angeordnet ist und das Band (107) mittels Umlenk- und/oder Antriebs-Rollen geführt ist, dadurch gekennzeichnet, daß die Achsen (103, 128) der Rollen (102, 110, 110') mit der Flächennormalen (129) des Flüssigkeitsspiegels der Lösung (108) einen Winkel im Bereich von 20 bis 70 ° einschließen, wobei eine erste Rolle (102) als Kathodenwalze mit ihrer unteren Nabe (132) und wenigstens einem Teil ihrer elektrisch leitenden Mantelfläche in die Lösung eintaucht und wenigstens eine zweite Rolle (110, 110') als Umlenk-Rolle außerhalb der Lösung (108) angeordnet ist und daß das Band auf seiner zur ersten Rolle (102) gerichteten Oberfläche elektrisch leitend ausgebildet ist.

2. Vorrichtung nach Anspruch 1, dadurch gekennzeichnet, daß in Bandumlaufrichtung gesehen nach der Abstreifvorrichtung (113) eine Abspülvorrichtung (114) für das abgeschiedene Metall angeordnet ist.

3. Vorrichtung nach Anspruch 1 oder 2 dadurch gekennzeichnet, daß die erste Rolle (102) als Kathodenwalze mit ihrer Mantelfläche vollständig von der Lösung (108) umgeben ist.

4. Vorrichtung nach einem der Ansprüche 1 bis 3, dadurch gekennzeichnet, daß die aus der Lösung (8) herausragende Nabe (130) der ersten Rolle (102) über einen Stromabnehmer (131) mit dem negativen Pol der Stromversorgung (104) verbunden ist.

5. Vorrichtung nach einem der Ansprüche 1 bis 4, dadurch gekennzeichnet, daß die erste Rolle (102) mittels der aus der Lösung (108) herausragenden Nabe (130) einseitig gelagert ist.

6. Vorrichtung nach einem der Ansprüche 1 bis 5, dadurch gekennzeichnet, daß der Durchmesser der ersten Rolle (102) größer ist als der Durchmesser der zweiten Rolle (110').

7. Vorrichtung nach einem der Ansprüche 1 bis 6 dadurch gekennzeichnet, daß zum Antrieb des Bandes die außerhalb der Lösung befindliche zweite Rolle (110, 110') vorgesehen ist, wobei die zweite Rolle (110, 110') mit einer Antriebsvorrichtung verbunden ist.

8. Vorrichtung nach einem der Ansprüche 1 bis 7, dadurch gekennzeichnet, daß in Bandumlaufrichtung gesehen, vor der Abstreifvorrichtung (113) eine Trockenvorrichtung (112) vorgesehen ist.

9. Vorrichtung nach Anspruch 8, dadurch gekennzeichnet, daß die Trockenvorrichtung (112) Glühwendel (116) zur Abgabe von Wärmestrahlung aufweist.

10. Vorrichtung nach einem der Ansprüche 1 bis 9, dadurch gekennzeichnet, daß die Abstreifvorrichtung (113) rotierende Bürsten (117) enthält, deren Rotationsachsen parallel zur Ebene des die Abstreifvorrichtung durchlaufenden flexiblen Bandes (107) angeordnet sind.

11. Vorrichtung nach einem der Ansprüche 1 bis 10, dadurch gekennzeichnet, daß unterhalb der Abstreifvorrichtung (113) eine Sammelvorrichtung (118) für das abgeschiedene elektrolythaltige Metall angeordnet ist, an die sich eine Abtrennvorrichtung (119) anschließt.
